# EUROPÄISCHE PATENTANMELDUNG

(11) **EP 4 755 610 A1**
(43) Veröffentlichungstag der Anmeldung: **10.06.2026**
(21) Anmeldenummer: 25213369.9
(22) Anmeldetag: 04.11.2025
(51) Int. Cl.: B29C 49/78, B29C 49/80, B29C 49/06, B29C 49/42, G01N 21/90

(54) **VORRICHTUNG UND VERFAHREN ZUM INSPIZIEREN, MASCHINE UND ANLAGE ZUM HERSTELLEN UND/ODER BEHANDELN MINDESTENS EINES BEHÄLTERS**

(30) Priorität: 04.12.2024 DE 102024136104
(71) Anmelder: KHS GmbH, 44143 Dortmund (DE)
(72) Erfinder: Fritsche, Claas, 44143 Dortmund (DE); Lewin, Frank, 44143 Dortmund (DE)

(57) **Zusammenfassung**

Die Erfindung betrifft eine Vorrichtung (10) zum Inspizieren mindestens eines Inspektionsbereichs (12) zum Anordnen mindestens eines Behälters (18) mittels mindestens eines Halteelements (14, 16), umfassend mindestens eine Detektoreinheit (20) in einem ersten Inspektionsmodus zum Ermitteln von ersten Messdaten des mindestens einen von dem mindestens einen Halteelement (14, 16) gehaltenen Behälters (18) zumindest im Inspektionsbereich (12) und mindestens eine Auswerteeinheit (22) zum Ermitteln eines ersten Inspektionsergebnisses zum Beurteilen mindestens eines ersten Zustands zumindest eines Teils des mindestens einen Behälters (18) aus den ermittelten ersten Messdaten, wobei die mindestens eine Detektoreinheit (20) in einem zweiten Inspektionsmodus weiter zum Ermitteln von zweiten Messdaten von zumindest einem Abschnitt des Halteelements (14, 16) im Inspektionsbereich (12) ausgebildet ist und die Auswerteeinheit (22) weiter zum Ermitteln eines zweiten Inspektionsergebnisses zum Beurteilen zumindest mindestens eines zweiten Zustands des mindestens einen Halteelements (14, 16) aus den ermittelten zweiten Messdaten ausgebildet ist.

## Beschreibung

Die Erfindung betrifft eine Vorrichtung und ein Verfahren zum Inspizieren sowie eine Maschine und eine Anlage zum Herstellen und/oder Behandeln mindestens eines Behälters.

Inspektionsvorrichtungen können dazu eingesetzt werden, Produktionslinien hinsichtlich der hergestellten Produkte oder hinsichtlich der die Produkte handhabenden Elemente zu inspizieren. Durch die Inspektionen können fehlerhafte Produkte aus der Produktionslinie entfernt werden und Fehler im Betrieb der Produktionslinien frühzeitig entdeckt werden.

Aus DE 10 2005 060 814 B4 ist eine Vorrichtung zum Formen von Behältern bekannt, bei der die Vorformlinge durch eine Inspektionseinrichtung inspiziert werden können. Die Inspektionseinrichtung kann verschiedene Bereiche der Vorformlinge untersuchen, beispielsweise einen Seitenwand-, einen Boden- und/oder einen Mündungsbereich eines Vorformlings.

Weiter ist aus DE 10 2017 111 598 A1 eine Kamera für eine Übergabeüberwachung bekannt. Die Kamera kann als Inspektionsvorrichtung zumindest einen Teil der Behandlungseinrichtung und einen Übergabebereich während eines Übergabevorganges eins Behältnisses optisch inspizieren.

Aufgabe der Erfindung ist es, eine Vorrichtung und ein Verfahren zum Inspizieren bereitzustellen, mit denen der Aufwand für die Inspektion reduziert werden kann und damit Kosten eingespart werden können.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Gemäß einem ersten Aspekt wird eine Vorrichtung zum Inspizieren mindestens eines Inspektionsbereichs zum Anordnen mindestens eines Behälters mittels mindestens eines Halteelements beschrieben, umfassend mindestens eine Detektoreinheit in einem ersten Inspektionsmodus zum Ermitteln von ersten Messdaten des mindestens einen von dem mindestens einen Halteelement gehaltenen Behälters zumindest im Inspektionsbereich und mindestens eine Auswerteeinheit zum Ermitteln eines ersten Inspektionsergebnisses zum Beurteilen mindestens eines ersten Zustands zumindest eines Teils des mindestens einen Behälters aus den ermittelten ersten Messdaten, wobei erfindungsgemäß vorgesehen ist, dass die mindestens eine Detektoreinheit in einem zweiten Inspektionsmodus weiter zum Ermitteln von zweiten Messdaten von zumindest einem Abschnitt des Halteelements im Inspektionsbereich ausgebildet ist und die Auswerteeinheit weiter zum Ermitteln eines zweiten Inspektionsergebnisses zum Beurteilen zumindest mindestens eines zweiten Zustands des mindestens einen Halteelements aus den ermittelten zweiten Messdaten ausgebildet ist.

Die Vorrichtung ist damit dazu ausgebildet sowohl eine Inspektion der Behälter als auch eine Inspektion der Halteelemente durchzuführen, mit denen die Behälter im Inspektionsbereich gehalten werden. Dazu weist die Vorrichtung mindestens eine Detektoreinheit auf, die in einem ersten Inspektionsmodus erste Messdaten über den mindestens einen übergebenen Behälter und in einem zweiten Inspektionsmodus zweite Messdaten über das mindestens einen Halteelement ermitteln kann. Die mindestens eine Detektoreinheit kann damit derart orientiert sein, dass sie im laufenden Betrieb mindestens einen Vorformling und/oder Behälter in ihrem Messbereich bzw. Sichtfeld aufweist. Gleichzeitig kann die mindestens eine Detektoreinheit weiter derart orientiert sein, dass sie das mindestens eine Halteelement in ihrem Messbereich bzw. Sichtfeld aufweist. Es ist daher nicht weiter erforderlich, dass separate Detektoreinheiten für die Behälter und für die Halteelemente verwendet werden. Entsprechend kann die Auswerteeinheit ebenfalls sowohl für das Auswerten der ersten Messdaten als auch für das Auswerten der zweiten Messdaten ausgebildet sein. Dabei kann vorgesehen sein, dass die Auswerteeinheit unterscheiden kann, ob erste Messdaten und/oder zweite Messdaten vorliegen. Je nachdem, welcher Inspektionsmodus vorliegt, kann die Auswerteeinheit entsprechend ein erstes Inspektionsergebnis und/oder ein zweites Inspektionsergebnis ermitteln. Die ersten Messdaten und/oder zweiten Messdaten können beispielsweise als Bilddaten ausgebildet sein. Dabei können in den ersten Messdaten Bilddaten mindestens eines Behälters und Bilddaten mindestens eines Halteelements enthalten sein. Weiter können die zweiten Messdaten Bilddaten mindestens eines Halteelements ohne übergebenen Behälter aufweisen. Die zweiten Messdaten können dabei beispielsweise vor einem Produktionsstart ermittelt werden, wenn noch keine Behälter in dem Inspektionsbereich angeordnet werden. Auf diese Weise kann ein zweiter Zustand des mindestens einen Halteelements vor dem Start der Produktion ermittelt werden, sodass durch fehlerhafte Zustände des mindestens einen Halteelements fehlerhafte Übergaben von Behältern an andere Halteelemente und damit Produktionsstopps und Beschädigungen an den hergestellten Produkten vermieden werden können. Sowohl die mindestens eine Detektoreinheit als auch die mindestens eine Auswerteeinheit können damit multifunktional ausgebildet sein. Damit kann die Anzahl der Inspektionsvorrichtungen bzw. der Detektoreinheiten und/oder Auswerteeinheiten minimal gehalten werden, sodass der Aufwand für die Inspektion reduziert wird und Kosten eingespart werden können.

Unter dem Begriff Behälter können auch Vorformlinge verstanden werden, aus denen Behälter, beispielsweise durch bi-axiales Recken, hergestellt werden können.

Gemäß einigen Ausführungsbeispielen ist denkbar, dass die mindestens eine Detektoreinheit zum Ermitteln von ersten Messdaten mindestens einer Seitenwand, mindestens eines Behälterbodens und/oder mindestens eines Mündungsabschnitts des mindestens einen Behälters ausgebildet sein kann.

Die mindestens eine Detektoreinheit kann damit derart orientiert sein, im laufenden Betrieb, d. h. während im Inspektionsbereich Behälter von dem mindestens einen Halteelement gehalten und beispielsweise transportiert werden, erste Messdaten einer Seitenwand eines Behälters, eines Bodenbereichs eines Behälters und/oder eines Mündungsbereichs eines Behälters zu ermitteln. Mit der Detektoreinheit können damit dediziert Messdaten einer Seitenwand, eines Behälterbodenbereich und/oder eines Mündungsabschnitts eines Behälters ermittelt werden.

Entsprechend kann die mindestens eine Auswerteeinheit dazu ausgebildet sein, den Zustand einer Seitenwand, eines Bodenbereichs und/oder eines Mündungsabschnitts eines Behälters zu beurteilen.

Gemäß einigen Ausführungsbeispielen ist denkbar, dass das mindestens eine Halteelement als mindestens ein Greiffinger, mindestens eine Greifzange, mindestens eine Tasche eines Transportrads, mindestens ein Transportdorn, mindestens ein Abschnitt eines Drehtellers, mindestens ein Abschnitt einer Vakuumkammer und/oder mindestens ein Abschnitt eines Formwerkzeugs zum Umformen von Vorformlingen zu Behältern ausgebildet sein kann.

Die mindestens eine Detektoreinheit kann damit weiter derart orientiert sein, dass sie die angeführten Komponenten zumindest teilweise in ihrem Messbereich bzw. Sichtfeld aufweisen kann. Insbesondere, wenn die genannten Komponenten keinen Behälter bzw. Vorformlinge halten, können zweite Messdaten der angegebenen Komponenten durch die mindestens eine Detektoreinheit, zumindest in dem Messbereich der entsprechenden Detektoreinheit, mit hoher Qualität ermittelt werden. Es kann dann für die Beurteilung des Zustands des mindestens einen Halteelements nicht erforderlich sein, Messdaten für das vollständigen Halteelement zu ermitteln. Sofern keine Behälter von dem Halteelement gehalten werden, kann es ausreichend sein, für die Ermittlung des Zustands lediglich für mindestens einen Teil des Halteelements zweite Messdaten zu ermitteln.

Gemäß einigen Ausführungsbeispielen ist denkbar, dass die mindestens eine Detektoreinheit als Kamera ausgebildet sein kann.

Bei einer Ausbildung als Kamera können die ersten und/oder zweiten Messdaten als Bilddaten ausgebildet sein. Die Auswerteeinheit kann dann entsprechend als Bildverarbeitungseinheit ausgebildet sein, die zum Auswerten der ersten und zweiten Messdaten ausgebildet sein kann. Mit der Verwendung einer Kamera kann der Aufwand bei der Ermittlung der Messdaten reduziert werden. Weiter können bereits vorhandene Kamerasysteme und deren Auswertungseinheiten an Maschinen zum Herstellen und/oder behandeln von Behältern mit vergleichsweise geringem Aufwand nachgerüstet werden.

Gemäß einigen Ausführungsbeispielen ist denkbar, dass die mindestens eine Detektoreinheit einen ersten Beleuchtungsmodus zum Ermitteln der ersten Messdaten und einen zweiten Beleuchtungsmodus, der sich von dem ersten Beleuchtungsmodus unterscheidet, zum Ermitteln der zweiten Messdaten aufweisen kann.

Der erste Beleuchtungsmodus kann im ersten Inspektionsmodus verwendet werden. Der zweite Beleuchtungsmodus kann im zweiten Inspektionsmodus verwendet werden. Ein Beleuchtungsmodus kann beispielsweise Parameter zu einer Belichtungszeit, zu einer Leistung der Beleuchtung und/oder zu einer Wellenlänge der Beleuchtung aufweisen. Auch weitere Parameter sind denkbar. Die beiden Beleuchtungsmodi können sich in mindestens einem dieser Parameter unterscheiden.

Weiter kann die Detektoreinheit derart ausgebildet sein, dass sie im ersten Inspektionsmodus und/oder im zweiten Inspektionsmodus Einzelbilder bereitstellen kann. Auf diese Weise können beispielsweise im zweiten Inspektionsmodus zweite Messdaten von mindestens einem stillstehenden Halteelement ermittelt werden. Dies kann die Datenmenge reduzieren und die Qualität der entsprechenden Messdaten erhöhen.

Gemäß einigen Ausführungsbeispielen ist denkbar, dass die Auswerteeinheit im zweiten Inspektionsmodus zum Beurteilen zumindest mindestens einer Form und/oder mindestens einer Positionierung und/oder von Ablagerungen und/oder von Verunreinigungen als zweiten Zustand des mindestens einen Halteelements aus den ermittelten zweiten Messdaten ausgebildet sein kann.

Wie oben bereits erläutert kann es ausreichend sein, wenn die zweiten Messdaten keine Messdaten von Behältern aufweisen, dass die zweiten Messdaten lediglich Daten über mindestens einen Teil des mindestens einen Halteelements umfassen.

Gemäß einigen Ausführungsbeispielen ist denkbar, dass die Vorrichtung weiter mindestens eine Steuereinrichtung zum Steuern zumindest der mindestens einen Detektoreinheit aufweist, wobei die Steuereinrichtung derart ausgebildet ist, dass sie die mindestens eine Detektoreinheit zum Ermitteln von zweiten Messdaten ansteuert, wenn das mindestens eine Halteelement im mindestens einen Inspektionsbereich frei von Behältern sein kann.

Mit der Steuereinrichtung kann damit beispielsweise vor dem Start eine Produktion und/oder Behandlung von Behältern zunächst eine Inspektion der Halteelemente durchgeführt werden. Dann weisen die Halteelemente noch keine gehaltenen Behälter auf, sodass zweite Messdaten mit hoher Qualität ermittelt und ausgewertet werden können.

Weiter ist denkbar, dass die Steuereinrichtung zum Bereitstellen mindestens eines Positionssignals ausgebildet sein kann, wobei das mindestens eine Positionssignal mindestens eine Position mindestens eines Halteelements anzeigt, dessen zweites Inspektionsergebnis einen Defektzustand anzeigen kann. Auf diese Weise kann beispielsweise Wartungspersonal mitgeteilt werden, an welcher Position in der Transportvorrichtung ein defektes Halteelement angeordnet sein kann, das repariert oder ausgetauscht werden muss. Dies kann beispielsweise auch durch eine Ausgabe eines Warnsignals erfolgen.

Gemäß einem zweiten Aspekt wird eine Maschine zum Herstellen und/oder Behandeln mindestens eines Behälters beschrieben, umfassend mindestens eine Vorrichtung nach einem der vorangegangenen Ansprüche und mindestens eine erste Transportvorrichtung, an der das mindestens eine Halteelement für mindestens einen Behälter befestigt ist.

Die Behälter können damit mittels der ersten Transportvorrichtung innerhalb der Maschine transportiert werden. Die erste Transportvorrichtung weist dabei Halteelemente auf, und kann in dem Inspektionsbereich Behälter von mindestens einem weiteren Halteelement, das an einer anderen Transportvorrichtung befestigt sein kann, erhalten und/oder mindestens dem weiteren Halteelement übergeben.

Gemäß einigen Ausführungsbeispielen ist denkbar, dass die mindestens eine erste Transportvorrichtung als Transferrad ausgebildet sein kann und die Maschine vorzugsweise als Rundläufermaschine ausgebildet sein kann.

Mittels einer vollständigen Umdrehung des Transferrads können damit nacheinander alle an dem Transferrad befestigten Halteelemente durch den Inspektionsbereich transportiert werden. Die mindestens eine Detektoreinheit kann damit zweite Messdaten für jedes Halteelement des Transferrads ermitteln. Analoges gilt, wenn die eine Maschine als Rundläufermaschine ausgebildet ist.

Weitere Vorteile und Wirkungen sowie Weiterbildungen der Maschine ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Gemäß einem dritten Aspekt wird eine Anlage zum Herstellen und/oder Behandeln mindestens eines Behälters beschrieben, umfassend mindestens eine zweite Transportvorrichtung, an der mindestens ein zweites Halteelement für mindestens einen Behälter befestigt ist, mindestens eine Maschine nach der vorangegangenen Beschreibung und/oder mindestens eine Vorrichtung nach der vorangegangenen Beschreibung, wobei sich ein Transportpfad zwischen der mindestens einen zweiten Transportvorrichtung und der Maschine erstreckt und mindestens ein Übergabebereich zum Übergeben mindestens eines Behälters zwischen der mindestens einen ersten Transportvorrichtung und der mindestens einen zweiten Transportvorrichtung angeordnet ist.

Die mindestens eine zweite Transportvorrichtung kann dazu ausgebildet sein, Behälter zu der Maschine bzw. der Vorrichtung entlang des Transportpfads zu transportieren. Alternativ kann die mindestens eine zweite Transportvorrichtung dazu ausgebildet sein, Behälter von der Maschine bzw. der Vorrichtung zu übernehmen und entlang des Transportpfads abzutransportieren. Im Übergabebereich kann eine Übergabe mindestens eines Behälters zwischen der ersten und zweiten Transportvorrichtung stattfinden. Dazu kann beispielsweise ein Halteelement der ersten Transportvorrichtung einen Behälter einem Halteelement der zweiten Transportvorrichtung übergeben oder umgekehrt. Die Halteelemente der beiden Transportvorrichtungen können dabei im Übergabebereich überlappen, wobei die beiden Halteelemente synchron und aufeinander abgestimmt im Übergabebereich bewegt werden können.

Der Übergabebereich kann beispielsweise der Inspektionsbereich sein oder zumindest teilweise mit dem Inspektionsbereich überlappen.

Eine Behandlungsmaschine kann beispielsweise mindestens eine Heizstrecke, mindestens eine Behälterherstellungsmaschine, mindestens eine Etikettiermaschine, mindestens eine Sterilisiermaschine und/oder mindestens eine Füllmaschine umfassen.

Vorteile und Wirkungen sowie Weiterbildungen der Anlage ergeben sich aus den Vorteilen und Wirkungen sowie Weiterbildungen der oben beschriebenen Vorrichtung und der oben beschriebenen Maschine. Zur Vermeidung von Wiederholungen wird daher in dieser Hinsicht auf die vorangegangene Beschreibung verwiesen.

Gemäß einem vierten Aspekt wird Verfahren zum Inspizieren mindestens eines von einem Halteelement in mindestens einem Inspektionsbereich gehaltenen Behälters, umfassend mindestens die folgenden Schritte: Ermitteln von ersten Messdaten des mindestens einen Behälters zumindest im Inspektionsbereich mittels mindestens einer Detektoreinheit in einem ersten Inspektionsmodus; Ermitteln eines ersten Inspektionsergebnisses zum Beurteilen mindestens eines ersten Zustands zumindest eines Teils des mindestens einen Behälters aus den ermittelten ersten Messdaten mittels mindestens einer Auswerteeinheit; Ermitteln von zweiten Messdaten von zumindest einem Abschnitt des Halteelements im Inspektionsbereich mittels der mindestens einen Detektoreinheit in einem zweiten Inspektionsmodus; und Ermitteln eines zweiten Inspektionsergebnisses zum Beurteilen zumindest mindestens eines zweiten Zustands des mindestens einen Halteelements aus den ermittelten zweiten Messdaten mittels der mindestens einen Auswerteeinheit.

Das Ermitteln von ersten Messdaten und das Ermitteln von zweiten Messdaten kann gleichzeitig und/oder nacheinander durchgeführt werden.

Gemäß einigen Ausführungsbeispielen ist denkbar, dass der Schritt Ermitteln von zweiten Messdaten von zumindest einem Abschnitt des Halteelements im Inspektionsbereich mittels der mindestens einen Detektoreinheit durchgeführt werden kann, wenn das mindestens eine Halteelement im mindestens einen Inspektionsbereich frei von Behältern ist.

Die Ermittlung der zweiten Messdaten kann damit vereinfacht werden, da dann keine Messdaten der übergebenen Behälter eine Auswertung der zweiten Messdaten beeinflussen können.

Gemäß einigen Ausführungsbeispielen ist denkbar, dass der Schritt Ermitteln von zweiten Messdaten vor dem Schritt Ermitteln von ersten Messdaten durchgeführt werden kann.

Damit kann zunächst ein Zustand der Halteelemente ermittelt werden, bevor ein Transport bzw. eine Inspektion von Behältern zwischen den Halteelementen im Inspektionsbereich stattfindet. Im laufenden Betrieb können dann erste Messdaten ermittelt werden, um die Qualität der Behälter zu beurteilen. Weiter kann bei einer Unterbrechung des Behältertransports ebenfalls eine Inspektion der Halteelemente stattfinden, wenn in bestimmten Zeitabschnitten keine Behälter von den Haltelementen gehalten werden. So kann die Transportvorrichtung beispielsweise bei einem Formatwechsel von Behältern geleert werden, sodass deren Halteelemente keine Behälter mehr transportieren. Während des Formatwechsels kann dann eine Inspektion der Halteelemente durchgeführt werden, um im nachfolgenden Transportvorgang eine reibungslose Übergabe bereitzustellen. Damit können vor einem erneuten Anfahren der Transportvorrichtung Unterbrechungen durch fehlerhafte Halteelemente bzw. fehlerhaft positionierte Halteelemente vermieden werden.

Gemäß einigen Ausführungsbeispielen ist denkbar, dass der mindestens eine zweite Zustand mindestens die Zustandswerte in Ordnung oder nicht in Ordnung aufweisen kann und das Verfahren weiter mindestens folgenden Schritt aufweisen kann: Transportieren mindestens eines Behälter mittels des mindestens einen Halteelements im mindestens einen Inspektionsbereich, wenn das zweite Inspektionsergebnis den mindestens einen zweiten Zustand als in Ordnung beurteilt.

Als in Ordnung kann ein Zustand beurteilt werden, wenn eine Form und/oder eine Ausrichtung des mindestens einen inspizierten Halteelements zumindest innerhalb mindestens eines Toleranzbereichs mindestens einem Sollzustand entspricht. Andernfalls kann der Zustand als nicht in Ordnung beurteilt werden.

Gemäß einigen Ausführungsbeispielen ist denkbar, dass im Schritt: Ermitteln eines zweiten Inspektionsergebnisses, eine Synchronität von mindestens einem ersten Halteelement einer ersten Transportvorrichtung und mindestens einem zweiten Halteelement einer zweiten Transportvorrichtung in einem Übergabebereich zwischen der ersten Transportvorrichtung und der zweiten Transportvorrichtung mittels der mindestens einen Auswerteeinheit beurteilt werden kann.

Weitere Vorteile und Wirkungen sowie Weiterbildungen des Verfahrens ergeben sich aus den Vorteilen und Wirkungen sowie Weiterbildungen der oben beschriebenen Vorrichtung, der oben beschriebenen Maschine und der oben beschriebenen Anlage. Zur Vermeidung von Wiederholungen wird daher in dieser Hinsicht auf die vorangegangene Beschreibung verwiesen.

Im Folgenden wird die Erfindung anhand einer beispielhaften Ausführungsform mittels der beigefügten Zeichnung beschrieben. Es zeigen:
- Figur 1a, b: eine schematische Darstellung eines ersten Ausführungsbeispiels einer Vorrichtung zum Inspizieren in Draufsicht;
- Figur 2a, b: eine schematische Darstellung des ersten Ausführungsbeispiels der Vorrichtung in einer Seitenansicht;
- Figur 3a-c: eine schematische Darstellung eines zweiten, dritten und vierten Ausführungsbeispiels der Vorrichtung;
- Figur 4: eine schematische Darstellung einer Anlage zum Herstellen und/oder Behandeln mindestens eines Behälters; und
- Figur 5: ein Diagramm des Verfahrens zum Inspizieren.

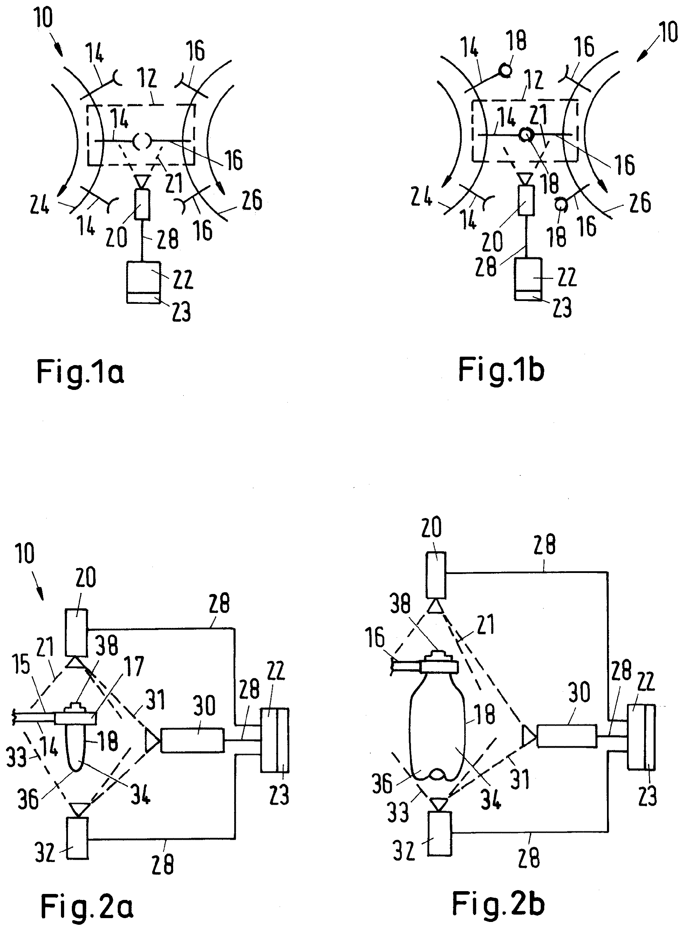

Die Vorrichtung zum Inspizieren wird im Folgenden in ihrer Gesamtheit mit dem Bezugszeichen 10 bezeichnet, wie in den Figuren 1a und 1b dargestellt ist.

Die Vorrichtung 10 weist gemäß Figur 1a mindestens einen Inspektionsbereich 12 auf, in dem mindestens ein erstes Halteelement 14 und/oder ein zweites Halteelement 16 angeordnet werden können. Das mindestens eine erste Halteelement 14 kann Teil einer Transportvorrichtung 24 sein und zum Halten eines Behälters 18 ausgebildet sein. Das mindestens eine zweite Halteelement 16 kann Teil einer zweiten Transportvorrichtung 26 sein und ebenfalls zum Halten von Behältern 18 ausgebildet sein. Der Inspektionsbereich 12 kann in einem Übergabebereich angeordnet sein, in dem Behälter 18 zwischen dem ersten Halteelement 14 und dem zweiten Halteelement 16 übergeben werden können.

Die mindestens eine erste Transportvorrichtung 24 kann dazu ausgebildet sein, das mindestens eine erste Halteelement 14 in den mindestens einen Inspektionsbereich 12 hinein und hinaus zu bewegen. Die mindestens eine zweite Transportvorrichtung 26 kann dazu ausgebildet sein, das mindestens eine zweite Halteelement 16 in den mindestens einen Inspektionsbereich 12 hinein und hinaus zu bewegen.

Die erste Transportvorrichtung 24 und/oder die zweite Transportvorrichtung 26 können als Transporträder ausgebildet sein, die drehbar gelagert sind und an deren Umfang das erste Halteelement 14 bzw. das zweite Halteelement 16 angeordnet sind. Die Transporträder können beispielsweise in Richtung der in den Figuren 1 a und 1b dargestellten Pfeile gedreht werden.

Das mindestens eine erste Halteelement 14 und/oder das mindestens eine zweite Halteelement 16 können als Zangen und/oder Greifer ausgebildet und an einem jeweiligen Umfang der oben angeführten Transporträder angeordnet sein. Alternativ können das mindestens eine erste Halteelement 14 und/oder das mindestens eine zweite Halteelement 16 als Taschen zum Halten von Behältern 18 an dem Umfang der entsprechenden Transportvorrichtung 24, 26 oder als Drehteller 13 ausgebildet sein. Ein Drehteller 13 kann einen Behälter 18 von unten halten. Weiter ist denkbar, dass das erste Halteelement 14 und/oder das zweite Halteelement 16 als Transportdorn ausgebildet sein kann, der einen Behälter an einem Mündungsbereich halten kann.

Weiter weist die Vorrichtung 10 mindestens eine Detektoreinheit 20 auf, mit der in einem ersten Inspektionsmodus erste Messdaten des mindestens einen in dem Inspektionsbereich 12 gehaltenen Behälters 18 ermittelt werden können. Die ersten Messdaten können beispielsweise Bilddaten sein, die eine Ansicht des übergebenen Behälters 18 anzeigen können. Die mindestens eine Detektoreinheit 20 kann damit als Kamera ausgebildet sein.

In dem ersten Inspektionsmodus kann die mindestens eine Detektoreinheit 20 einen ersten Beleuchtungsmodus bereitstellen, mit dem die ersten Messdaten ermittelt werden können. Dazu kann beispielsweise eine Wellenlänge, eine Belichtungszeit oder eine Leistung der Beleuchtung auf bestimmte Werte eingestellt werden. Es können noch weitere Parameter für den ersten Beleuchtungsmodus auf spezifische Werte eingestellt werden.

Entsprechend kann die mindestens eine Detektoreinheit 20 derart ausgerichtet sein, dass ein Sichtfeld 21 der Detektoreinheit 20 den Inspektionsbereich 12 derart umfasst, dass der Behälter 18 während der Inspektion im Sichtfeld 21 angeordnet ist.

Entsprechend können auch mindestens ein Teil des ersten Halteelements 14 und/oder des zweiten Halteelements 16 in dem Sichtfeld 21 angeordnet sein.

Dieselbe mindestens eine Detektoreinheit 20 ist weiter dazu ausgebildet sein, in einem zweiten Inspektionsmodus zweite Messdaten zu ermitteln, die zumindest einen Abschnitt des ersten und/oder zweiten Halteelements 14, 16 im Inspektionsbereich 12 anzeigen können.

Die mindestens eine Detektoreinheit 20 kann weiter für den zweiten Inspektionsmodus einen zweiten Beleuchtungsmodus aufweisen. In dem zweiten Beleuchtungsmodus können die zweiten Messdaten ermittelt werden. Der zweite Beleuchtungsmodus unterscheidet sich dabei von dem ersten Beleuchtungsmodus in mindestens einem der oben genannten Parameter. Auf diese Weise kann für jeden Inspektionsmodus eine passende Beleuchtung gewählt werden, um entsprechende Messdaten zu erhalten, die für die jeweilige Beurteilung des Zustands der Behälter bzw. der Halteelemente optimiert ausgebildet sind.

Weiter kann die Vorrichtung 10 mindestens eine Auswerteeinheit 22 aufweisen, die aus den ermittelten ersten Messdaten ein erstes Inspektionsergebnis ermitteln kann. Das Inspektionsergebnis kann eine Beurteilung mindestens eines ersten Zustands zumindest eines Teils des mindestens einen Behälters 18 anzeigen. Der erste Zustand kann beispielsweise ein Schaden an dem Behälter 18, einen Fremdkörper an den Behälter 18 oder eine Materialtrübung des Behälters oder einen Einschluss im Material des Behälters 18 anzeigen.

Die mindestens eine Auswerteeinheit 22 ist weiter dazu ausgebildet, aus den zweiten Messdaten mindestens ein zweites Inspektionsergebnis zu ermitteln. Das zweite Inspektionsergebnis kann eine Beurteilung über einen zweiten Zustand des mindestens einen ersten und/oder zweiten Halteelements 14, 16 anzeigen. D. h., dass dieselbe Auswerteeinheit 22 sowohl einen ersten Zustand über den Behälter 18 als auch einen zweiten Zustand über das mindestens eine erste und/oder zweite Halteelement 14, 16 ermitteln kann.

Weiter kann die Vorrichtung 10 mindestens eine Steuereinrichtung 23 zum Steuern der Detektoreinheit 20 aufweisen. Die Steuereinrichtung 23 kann beispielsweise dazu ausgebildet sein, die Detektoreinheit 20 auszulösen, wenn erste und/oder zweite Messdaten aufgenommen werden sollen.

Die Steuereinrichtung 23 kann weiter zum Bereitstellen mindestens eines Positionssignals ausgebildet sein. Das mindestens eine Positionssignal kann dabei mindestens eine Position eines Halteelements 14, 16 anzeigen, das defekt sein kann. Ein defektes Halteelement 14, 16 kann beispielsweise dann vorliegen, wenn das zweite Inspektionsergebnis dieses Halteelements 14, 16 einen Defektzustand anzeigt.

Das Positionssignal kann beispielsweise an Wartungspersonal ausgegeben werden, damit das defekte Halteelement 14, 16 repariert oder ausgetauscht werden kann. Gleichzeitig kann auch ein Warnsignal von der Steuereinrichtung 23 ausgegeben werden, um Wartungspersonal auf das Vorhandensein des defekten Halteelements 14, 16 hinzuweisen.

In Figur 1a ist die Vorrichtung 10 ohne Behälter 18 dargestellt. Die Steuereinheit 23 kann dazu ausgebildet sein, die Detektoreinheit 20 auszulösen, um dann lediglich zweite Messdaten bereitstellen, die keine Messdaten von Behältern 18 aufweisen und von der Auswerteeinheit 22 dazu verwendet werden können, das zweite Inspektionsergebnis bereitzustellen.

In Figur 1b werden Behälter 18 von einem Teil der ersten Halteelemente 14 und einem Teil der zweiten Halteelemente 16 gehalten und können im Inspektionsbereich 12 übergeben werden.

Die Auswerteeinheit 22 kann über eine Signalverbindung 28 mit der Detektoreinheit 20 verbunden sein. Die Signalverbindung 28 kann kabellos oder kabelgebunden ausgebildet sein.

Die Steuereinrichtung 23 kann dazu ausgebildet sein, die mindestens eine Detektoreinheit 20 bei Vorhandensein eines Behälters 18 im Inspektionsbereich 12 auszulösen, um sowohl erste Messdaten als auch zweite Messdaten bereitzustellen.

Weiter kann die Auswerteeinheit 22 bei Vorhandensein eines Behälters 18 im Inspektionsbereich 12 dazu ausgebildet sein, lediglich das erste Inspektionsergebnis zu ermitteln. Alternativ kann die Auswerteeinheit 22 in dieser Konfiguration dazu ausgebildet sein, sowohl den ersten Zustand als auch den zweiten Zustand zu ermitteln.

Wie in den Figuren 2a und 2b dargestellt, kann die Vorrichtung 10 eine erste Detektoreinheit 20 mit einem ersten Sichtfeld 21, eine zweite Detektoreinheit 30 mit einem zweiten Sichtfeld 31 und/oder eine dritte Detektoreinheit 32 mit einem dritten Sichtfeld 33 aufweisen. Die Vorrichtung 10 kann eine beliebige Anzahl an Detektoreinheiten 20 aufweisen

Die erste Detektoreinheit 20 kann derart ausgebildet sein, dass während der Inspektion zumindest ein Mündungsbereich 38 des Behälters 18 in dem ersten Sichtfeld 21 angeordnet ist.

Die zweite Detektoreinheit 30 kann derart ausgebildet sein, dass während der Inspektion des Behälters 18 zumindest eine Seitenwand 34 des Behälters 18 in dem zweiten Sichtfeld 31 angeordnet ist.

Die dritte Detektoreinheit 32 kann derart ausgebildet sein, dass ein Bodenbereich 36 des Behälters 18 in dem dritten Sichtfeld 33 angeordnet ist.

Jede der oben angeführten Detektoreinheiten 20, 30, 32 kann erste Messdaten über den jeweiligen Teil des Behälters bereitstellen.

Weiter ist ersichtlich, dass zumindest ein Teil des ersten Halteelements 14 in Figur 2a bzw. ein Teil des zweiten Halteelements 16 in Figur 2b ebenfalls in den ersten bis dritten Sichtfeldern 21, 31, 33 angeordnet ist. Die Detektoreinheiten 20, 30, 32 können damit ebenfalls zweite Messdaten bereitstellen.

In den Ausführungsbeispielen gemäß Figur 2a und 2b wird jeweils lediglich ein Halteelement pro gehaltenen Behälter 18 in dem Inspektionsbereich 12 inspiziert.

Jedoch können die Erläuterungen zu Figur 1a bis Figur 1c analog auf die Figuren 2a und 2b übertragen werden.

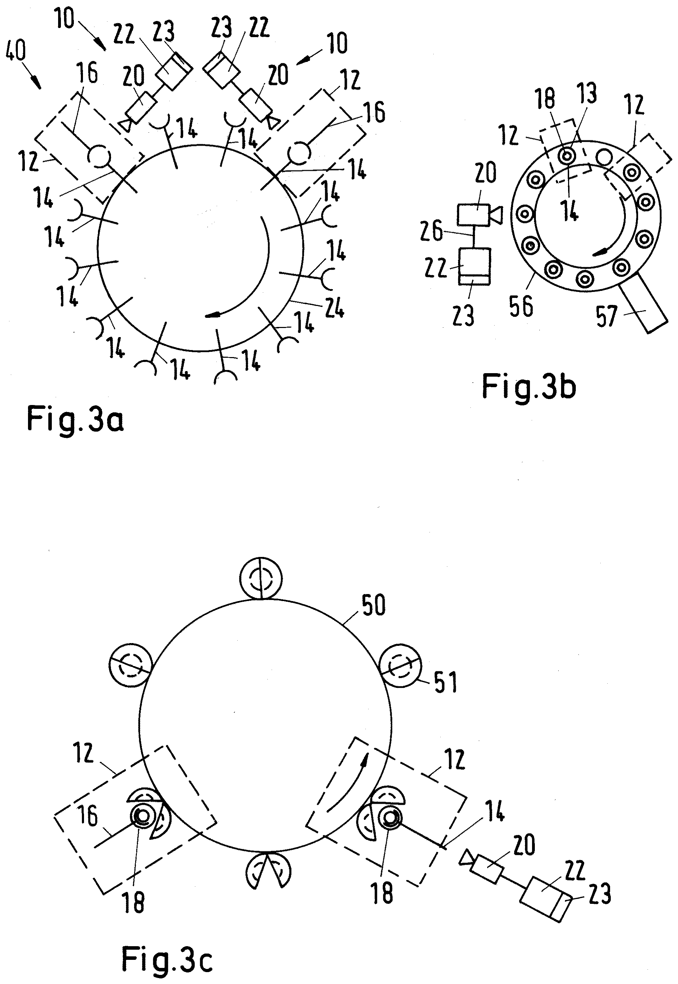

In den Figuren 3a bis 3c sind verschiedene Ausführungsbeispiele für die Halteelemente 14, 16 dargestellt.

So können die Halteelemente gemäß Figur 3a beispielsweise als Greifer und/oder Zangen ausgebildet sein. In diesem Ausführungsbeispiel können die Vorrichtung 10 Teil eines Transportrads 24 sein, mit dem die Behälter zuvor 18 transportiert werden können.

Gemäß Figur 3b können die Halteelemente auch als Drehteller 13 ausgebildet sein, auf denen die Behälter 18 angeordnet werden können und damit von den Drehtellern 13 gehalten werden können. Die Behälter 18 können auf den Drehtellern 13 weiter um ihre eigene Achse gedreht werden. Die Vorrichtung 10 kann in diesem Ausführungsbeispiel beispielsweise Teil einer Etikettiermaschine 56 sein. Die Drehteller 13 können dabei entlang der Pfeilrichtung transportiert werden. Mittels einer Etikettierstation 57 können Etiketten auf die gehaltenen Behälter 18 auf den Drehteller 13 angebracht werden.

Wie in Figur 3c dargestellt, können die Halteelemente auch als Formstationen 51 und/oder Vakuumkammer ausgebildet sein, die geöffnet werden können, um Behälter 18 einzulegen und geschlossen werden können, um eine Umformung bzw. eine Behandlung der Behälter 18 durchführen zu können. In diesem Ausführungsbeispiel kann die Vorrichtung 10 Teil einer Behälterherstellungsmaschine 50 bzw. einer Sterilisationsmaschine oder Beschichtungsmaschine sein.

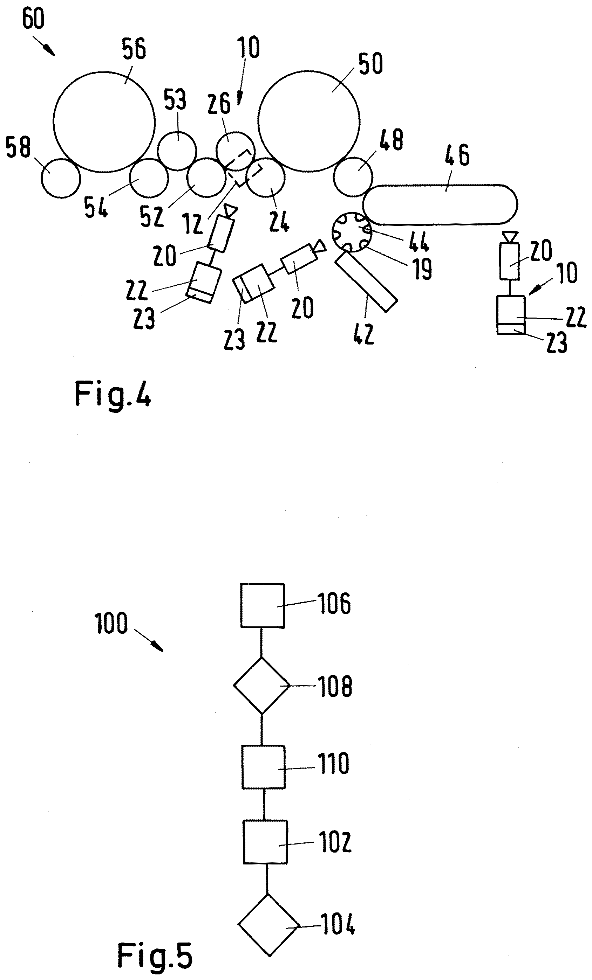

Figur 4 zeigt eine Anlage 60 zum Herstellen und/oder Behandeln von Behältern. Die Anlage 60 kann eine Heizstrecke 46 zum thermischen Konditionieren von Vorformlingen zum Herstellen von Behältern 18 aufweisen. Weiter kann mindestens eine oben erläuterte Behälterherstellungsmaschine 50 und/oder mindestens eine oben erläuterte Etikettiermaschine 56 Teil der Anlage 60 sein.

Eine Vielzahl von Transportvorrichtungen 24, 26, 42, 44, 48, 52, 53, 54, 58 können ebenfalls Teil der Anlage 60 sein. Durch die Transportvorrichtungen 24, 26, 42, 44, 48, 52, 53, 54, 58, die Heizstrecke 46, die Behälterherstellungsmaschine 50 und/oder die Etikettiermaschine 56 können ein Transportpfad für die Behälter 18 definieren. An den Transportvorrichtungen 24, 26, 42, 44, 48, 52, 53, 54, 58 und der Heizstrecke 46, der Behälterherstellungsmaschine 50 und/oder der Etikettiermaschine 56 kann jeweils mindestens ein Inspektionsbereich 12 angeordnet sein.

Weiter kann die Anlage 60 eine Vielzahl von Detektoreinheiten 20 und Auswerteeinheiten 22 aufweisen, mit denen die Behälter 18 und die Halteelemente 14, 16 gemessen und beurteilt werden können.

In Figur 5 wird ein Diagramm eines Verfahrens 100 zum Inspizieren mindestens eines Behälters 18 dargestellt, der von mindestens einem Halteelement 14, 16 gehalten wird.

In diesem Ausführungsbeispiel kann zunächst ein Schritt 106 durchgeführt werden, in dem zweite Messdaten von zumindest einem Abschnitt eines Halteelement 14, 16 im Inspektionsbereich 12 ermittelt werden. Die Ermittlung der zweiten Messdaten kann mittels einer Detektoreinheit 20 erfolgen.

Das Halteelement 14, 16 kann dabei frei von einem Behälter 18 sein.

In einem weiteren Schritt 108 kann ein zweites Inspektionsergebnis zum Beurteilen zumindest eines zweiten Zustands des mindestens einen Halteelements 14, 16 ermittelt werden. Der zweite Zustand kann aus den ermittelten zweiten Messdaten ermittelt werden. Die Ermittlung kann von mindestens einer Auswerteeinheit 22 durchgeführt werden.

Der mindestens eine zweite Zustand kann zumindest einen Zustandswert "in Ordnung" oder "nicht in Ordnung" aufweisen. Wenn der mindestens eine zweite Zustand den Zustandswert "in Ordnung" aufweist, kann gemäß dem optionalen Schritt 110 mindestens ein Behälter 18 mittels des mindestens einen Halteelements 14, 16 transportiert werden. Der Behälter 18 kann dabei in den Inspektionsbereich 12 transportiert werden.

Die Auswerteeinheit kann dann beispielsweise überprüfen, ob Halteelemente verschiedener Transportvorrichtungen 24, 26 in einem Übergabebereich synchron zueinander bewegt werden. Wenn keine Synchronität vorhanden ist, kann der mindestens eine zweite Zustand als "nicht in Ordnung" bewertet werden.

Ebenfalls als "nicht in Ordnung" kann der mindestens eine zweite Zustand beurteilt werden, wenn das beurteilte Halteelement 14, 16 eine abweichende Form, eine fehlerhafte Positionierung, Ablagerungen und/oder Verunreinigungen aufweist.

Gemäß einem Schritt 102 können erste Messdaten des mindestens einen Behälters 18 ermittelt werden, wenn der mindestens eine Behälter 18 im Inspektionsbereich 12 angeordnet ist. Die Ermittlung der ersten Messdaten wird mittels der mindestens einen Detektoreinheit 20 durchgeführt, mit der bereits die zweiten Messdaten ermittelt wurden.

Aus den ersten Messdaten kann in einem weiteren Schritt 108 ein erstes Inspektionsergebnis ermittelt werden. Mit dem ersten Inspektionsergebnis kann beurteilt werden, ob der mindestens eine erste Zustand des mindestens einen Behälters 18 in Ordnung ist. Die Ermittlung des ersten Inspektionsergebnisses kann mittels der mindestens einen Auswerteeinheit 22 durchgeführt werden, mit der bereits das zweite Inspektionsergebnis ermittelt wurde.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: Vorrichtung zum Inspizieren
- 12: Inspektionsbereich
- 13: Drehteller
- 14: Halteelement
- 15: Greifzange
- 16: Halteelement
- 17: Greiffinger
- 18: Behälter
- 19: Tasche
- 20: Detektoreinheit
- 21: Sichtfeld
- 22: Auswerteeinheit
- 23: Steuereinrichtung
- 24: Transportvorrichtung
- 26: Transportvorrichtung
- 28: Signalverbindung
- 30: Detektoreinheit
- 31: Sichtfeld
- 32: Detektoreinheit
- 33: Sichtfeld
- 34: Seitenwand
- 36: Behälterboden
- 38: Mündungsbereich
- 42: Transportvorrichtung
- 44: Transportvorrichtung
- 46: Heizstrecke
- 48: Transportvorrichtung
- 50: Behälterherstellungsmaschine
- 51: Formwerkzeugs
- 52: Transportvorrichtung
- 53: Transportvorrichtung
- 54: Transportvorrichtung
- 56: Etikettiermaschine
- 58: Transportvorrichtung
- 60: Anlage

## Patentansprüche

1. Vorrichtung (10) zum Inspizieren mindestens eines Inspektionsbereichs (12) zum Anordnen mindestens eines Behälters (18) mittels mindestens eines Halteelements (14, 16), umfassend mindestens eine Detektoreinheit (20) in einem ersten Inspektionsmodus zum Ermitteln von ersten Messdaten des mindestens einen von dem mindestens einen Halteelement (14, 16) gehaltenen Behälters (18) zumindest im Inspektionsbereich (12) und mindestens eine Auswerteeinheit (22) zum Ermitteln eines ersten Inspektionsergebnisses zum Beurteilen mindestens eines ersten Zustands zumindest eines Teils des mindestens einen Behälters (18) aus den ermittelten ersten Messdaten, **dadurch gekennzeichnet, dass** die mindestens eine Detektoreinheit (20) in einem zweiten Inspektionsmodus weiter zum Ermitteln von zweiten Messdaten von zumindest einem Abschnitt des Halteelements (14, 16) im Inspektionsbereich (12) ausgebildet ist und die Auswerteeinheit (22) weiter zum Ermitteln eines zweiten Inspektionsergebnisses zum Beurteilen zumindest mindestens eines zweiten Zustands des mindestens einen Halteelements (14, 16) aus den ermittelten zweiten Messdaten ausgebildet ist.

2. Vorrichtung (10) nach Anspruch 1, **dadurch gekennzeichnet, dass** die mindestens eine Detektoreinheit (20) zum Ermitteln von ersten Messdaten mindestens einer Seitenwand (34) des mindestens einen Behälters (18) ausgebildet ist.

3. Vorrichtung (10) nach Anspruch 1 oder 2, **dadurch gekennzeichnet, dass** die mindestens eine Detektoreinheit (20) zum Ermitteln von ersten Messdaten mindestens eines Behälterbodens (36) des mindestens einen Behälters (18) ausgebildet ist.

4. Vorrichtung (10) nach einem der vorangegangenen Ansprüche, **dadurch gekennzeichnet, dass** die mindestens eine Detektoreinheit (20) zum Ermitteln von ersten Messdaten mindestens eines Mündungsbereichs (38) des mindestens einen Behälters (18) ausgebildet ist.

5. Vorrichtung (10) nach einem der vorangegangenen Ansprüche, **dadurch gekennzeichnet, dass** das mindestens eine Halteelement (14, 16) als mindestens ein Greiffinger (17) und/oder mindestens eine Greifzange (15) und/oder mindestens eine Tasche (19) eines Transportrads (44) ausgebildet ist.

6. Vorrichtung (10) nach einem der vorangegangenen Ansprüche, **dadurch gekennzeichnet, dass** das mindestens eine Halteelement (14, 16) als mindestens ein Transportdorn ausgebildet ist.

7. Vorrichtung (10) nach einem der vorangegangenen Ansprüche, **dadurch gekennzeichnet, dass** das mindestens eine Halteelement (14, 16) als mindestens ein Abschnitt eines Drehtellers (13) ausgebildet ist.

8. Vorrichtung (10) nach einem der vorangegangenen Ansprüche, **dadurch gekennzeichnet, dass** das mindestens eine Halteelement (14, 16) als mindestens ein Abschnitt einer Vakuumkammer ausgebildet ist.

9. Vorrichtung (10) nach einem der vorangegangenen Ansprüche, **dadurch gekennzeichnet, dass** das mindestens eine Halteelement (14, 16) als mindestens ein Abschnitt eines Formwerkzeugs (51) zum Umformen von Vorformlingen zu Behältern (18) ausgebildet ist.

10. Vorrichtung (10) nach einem der vorangegangenen Ansprüche, **dadurch gekennzeichnet, dass** die mindestens eine Detektoreinheit (20) als Kamera ausgebildet ist.

11. Vorrichtung (10) nach einem der vorangegangenen Ansprüche, **dadurch gekennzeichnet, dass** die mindestens eine Detektoreinheit (20) einen ersten Beleuchtungsmodus zum Ermitteln der ersten Messdaten und einen zweiten Beleuchtungsmodus, der sich von dem ersten Beleuchtungsmodus unterscheidet, zum Ermitteln der zweiten Messdaten aufweist.

12. Vorrichtung (10) nach einem der vorangegangenen Ansprüche, **dadurch gekennzeichnet, dass** die Auswerteeinheit (22) im zweiten Inspektionsmodus zum Beurteilen zumindest mindestens einer Form und/oder mindestens einer Positionierung und/oder von Ablagerungen und/oder von Verunreinigungen als zweiten Zustand des mindestens einen Halteelements (16) aus den ermittelten zweiten Messdaten ausgebildet ist.

13. Vorrichtung (10) nach einem der vorangegangenen Ansprüche, **dadurch gekennzeichnet, dass** die Vorrichtung (10) weiter mindestens eine Steuereinrichtung (23) zum Steuern zumindest der mindestens einen Detektoreinheit (20) aufweist, wobei die Steuereinrichtung (23) derart ausgebildet ist, dass sie die mindestens eine Detektoreinheit (20) zum Ermitteln von zweiten Messdaten ansteuert, wenn das mindestens eine Halteelement (14, 16) im mindestens einen Inspektionsbereich (12) frei von Behältern ist.

14. Vorrichtung (10) nach Anspruch 13, **dadurch gekennzeichnet, dass** die Steuereinrichtung (23) zum Bereitstellen mindestens eines Positionssignals ausgebildet ist, wobei das mindestens eine Positionssignal mindestens eine Position mindestens eines Halteelements anzeigt, dessen zweites Inspektionsergebnis einen Defektzustand anzeigt.

15. Maschine (46, 50, 56) zum Herstellen und/oder Behandeln mindestens eines Behälters (18), umfassend mindestens eine Vorrichtung (10) nach einem der vorangegangenen Ansprüche und mindestens eine erste Transportvorrichtung (24), an der das mindestens eine Halteelement (14) für mindestens einen Behälter (18) befestigt ist.

16. Maschine (46, 50, 56) nach Anspruch 15, **dadurch gekennzeichnet, dass** die mindestens eine erste Transportvorrichtung (24) als Transferrad ausgebildet ist und die Maschine (46, 50, 56) vorzugsweise als Rundläufermaschine ausgebildet ist.

17. Anlage (60) zum Herstellen und/oder Behandeln mindestens eines Behälters (18), umfassend mindestens eine zweite Transportvorrichtung (26), an der mindestens ein zweites Halteelement (16) für mindestens einen Behälter (18) befestigt ist, mindestens eine Maschine (46, 50, 56) nach Anspruch 15 oder 16 und/oder mindestens eine Vorrichtung (10) nach einem der Ansprüche 1 bis 14, wobei sich ein Transportpfad zwischen der mindestens einen zweiten Transportvorrichtung (26) und der Maschine (46, 50, 56) erstreckt und mindestens ein Übergabebereich zum Übergeben mindestens eines Behälters zwischen der mindestens einen ersten Transportvorrichtung (24) und der mindestens einen zweiten Transportvorrichtung (26) angeordnet ist.

18. Verfahren (100) zum Inspizieren mindestens eines von einem Halteelement (14) in mindestens einem Inspektionsbereich (12) gehaltenen Behälters (18), umfassend mindestens die folgenden Schritte:
- Ermitteln (102) von ersten Messdaten des mindestens einen Behälters (18) zumindest im Inspektionsbereich (12) mittels mindestens einer Detektoreinheit (20) in einem ersten Inspektionsmodus;
- Ermitteln (104) eines ersten Inspektionsergebnisses zum Beurteilen mindestens eines ersten Zustands zumindest eines Teils des mindestens einen Behälters (18) aus den ermittelten ersten Messdaten mittels mindestens einer Auswerteeinheit (22);
- Ermitteln (106) von zweiten Messdaten von zumindest einem Abschnitt des Halteelements (14, 16) im Inspektionsbereich (12) mittels der mindestens einen Detektoreinheit (20) in einem zweiten Inspektionsmodus; und
- Ermitteln (108) eines zweiten Inspektionsergebnisses zum Beurteilen zumindest mindestens eines zweiten Zustands des mindestens einen Halteelements (14, 16) aus den ermittelten zweiten Messdaten mittels der mindestens einen Auswerteeinheit (22).

19. Verfahren (100) nach Anspruch 18, **dadurch gekennzeichnet, dass** der Schritt Ermitteln von zweiten Messdaten von zumindest einem Abschnitt des Halteelements (14, 16) im Inspektionsbereich (12) mittels der mindestens einen Detektoreinheit (20) durchgeführt wird, wenn das mindestens eine Halteelement (14, 16) im mindestens einen Inspektionsbereich (12) frei von Behältern (18) ist.

20. Verfahren (100) nach Anspruch 18 oder 19, **dadurch gekennzeichnet, dass** der Schritt Ermitteln von zweiten Messdaten vor dem Schritt Ermitteln von ersten Messdaten durchgeführt wird.

21. Verfahren (100) nach einem der Ansprüche 18 bis 20, **dadurch gekennzeichnet, dass** der mindestens eine zweite Zustand mindestens die Zustandswerte in Ordnung oder nicht in Ordnung aufweist und das Verfahren (100) weiter mindestens folgenden Schritt aufweist:
- Transportieren (110) mindestens eines Behälter (18) mittels des mindestens einen Halteelements (14, 16) im mindestens einen Inspektionsbereich (12), wenn das zweite Inspektionsergebnis den mindestens einen zweiten Zustand als in Ordnung beurteilt.

22. Verfahren (100) nach einem der Ansprüche 18 bis 21, **dadurch gekennzeichnet, dass** im Schritt (108): Ermitteln eines zweiten Inspektionsergebnisses, eine Synchronität von mindestens einem ersten Halteelement (14) einer ersten Transportvorrichtung (24) und mindestens einem zweiten Halteelement (16) einer zweiten Transportvorrichtung (26) in einem Übergabebereich zwischen der ersten Transportvorrichtung (24) und der zweiten Transportvorrichtung (26) mittels der mindestens einen Auswerteeinheit (22) beurteilt wird.
